# EUROPEAN PATENT APPLICATION

(11) **EP 4 822 586 A1**
(43) Date of publication of application: **14.10.2026**
(21) Application number: 24906447.8
(22) Date of filing: 19.12.2024
(51) Int. Cl.: G06F 40/166, G06F 40/284

(54) **DATA PROCESSING METHOD AND APPARATUS THEREFOR**

(30) Priority: 22.12.2023 CN 202311786847
(71) Applicant: Huawei Technologies Co., Ltd., Shenzhen, Guangdong 518129 (CN)
(72) Inventor: LIU, Qun, Shenzhen, Guangdong 518129 (CN); ZHANG, Guchun, Shenzhen, Guangdong 518129 (CN)
(74) Representative: Körber, Martin Hans
(86) International application number: PCT/CN2024/140542
(87) International publication number: WO 2025/130968

(57) **Abstract**

A data processing method relates to the field of artificial intelligence, and includes: obtaining a text; inserting a separator into the text, where the separator is a non-space character string, and the separator identifies a position of string separation in the text; and performing tokenization on the text into which the separator is inserted, to obtain a tokenization result. The separator in this application is a non-space character string (or may be referred to as a character string that is not entirely spaces). Because a non-space character is less common than a space in a natural language, the inserted separator can be accurately deleted during post-processing, to implement lossless tokenization.

## Description

This application claims priority to Chinese Patent Application No. 202311786847.2, filed with the China National Intellectual Property Administration on December 22, 2023 and entitled "DATA PROCESSING METHOD AND APPARATUS", which is incorporated herein by reference in its entirety.

### TECHNICAL FIELD

This application relates to the artificial intelligence field, and in particular, to a data processing method and apparatus.

### BACKGROUND

In an existing natural language processing system, Byte Pair Encoding (BPE) or the SentencePiece algorithm is used to process an input text, and character strings bound by a space in the text are segmented according to a specific rule, that is, the space is inserted into the text as a separator. The aim is to significantly reduce occurrence of an out-of-vocabulary word and improve generalization and fault tolerance of a language model during inference. If segmentation is not performed, all words included in a language need to appear in the training text. Otherwise, a word that does not appear (for example, a spelling error) is processed as an out-of-vocabulary word during inference, and fault tolerance and inference capabilities of the language model are greatly affected. In addition, without tokenization, some words that have the same source but different word types are considered as independent by the language model. As a result, semantics shared by the words cannot be fully acquired, and the generalization capability of the language model is reduced.

However, the algorithms focus more on how to obtain better sub-word distribution by establishing a mathematical model, and (partially) ignore inconsistency caused by a feature of the language to the tokenization, that is, a same word may have different tokenization results in different scenarios. A common solution is to introduce a pre-text (post-text) processing module before (after) the tokenization. Although the solution can well resolve the problem of inconsistency, noise is often introduced to cause lossy tokenization, that is, the input text cannot be restored after text preprocessing, tokenization, reverse tokenization, and text post-processing.

### SUMMARY

This application provides a data processing method, so that an inserted separator can be accurately deleted during post-processing, to implement lossless tokenization.

According to a first aspect, this application provides a data processing method, where the method includes: obtaining a text; inserting a separator into the text, where the separator is a non-space character string, and the separator identifies a position of string separation in the text; and performing tokenization on the text into which the separator is inserted, to obtain a tokenization result.

In this embodiment of this application, a non-space character string (or may be referred to as a character string that is not entirely spaces) is defined as the separator. For example, the character string that starts with one or more non-space characters and ends with one or more space characters is used as the separator. Because the non-space character is less common than the space in a natural language, the inserted separator can be accurately deleted during post-processing, to implement lossless tokenization.

In a possible implementation, the separator is a character string that starts with the non-space character string and ends with at least one space.

In a possible implementation, the separator is a character corresponding to source code " \u2582 ".

In a possible implementation, the inserting the separator into the text includes:
inserting the separator into the text based on at least one of the following methods:
inserting the separator at an adjacent position after a punctuation mark included in the text;
inserting the separator at a position at which different languages switch and that is not separated by a space in the text; or
inserting the separator at an adjacent position after a last space of consecutive spaces included in the text.

In a possible implementation, the method further includes: obtaining a first processing result of the text based on the tokenization result by using a language model.

In addition, post-processing may be directly performed on the tokenization result (for example, including reverse tokenization, separator removal, and character protection structure removal).

In a possible implementation, the first processing result includes a plurality of tokenization units and the separator, and the method further includes:
performing reverse tokenization on the first processing result, and removing the separator, to obtain a second processing result of the text.

In a possible implementation, a character string having a same character as the separator may also exist in the text. However, the character string belongs to the text and is not used as the separator. During post-processing, the character string should not be deleted. Therefore, the character string having the same character as the separator may be protected in the text, that is, a character string embedding structure is constructed to protect a non-space character part that appears in the separator in the input text, to form a protection character string. Further, the text into which the separator is inserted further includes the protection character string, where the protection character string identifies a text having the same character as the separator in the text, and indicates that the text having the same character as the separator is not the separator.

In a possible implementation, the first processing result further includes the protection character string, and the method further includes: removing the protection character string in the first processing result.

According to a second aspect, this application provides a data processing apparatus. The apparatus includes:
an obtaining module, configured to obtain a text; and
a processing module, configured to: insert a separator into the text, where the separator is a non-space character string, and the separator identifies a position of string separation in the text; and perform tokenization on the text into which the separator is inserted, to obtain a tokenization result.

In a possible implementation, the separator is a character corresponding to source code " \u2582 ".

In a possible implementation, the processing module is specifically configured to:
insert the separator into the text based on at least one of the following apparatuses:
inserting the separator at an adjacent position after a punctuation mark included in the text;
inserting the separator at a position at which different languages switch and that is not separated by a space in the text; or
inserting the separator at an adjacent position after a last space of consecutive spaces included in the text.

In a possible implementation, the processing module is further configured to:
obtain a first processing result of the text based on the tokenization result by using a language model.

In a possible implementation, the first processing result includes a plurality of tokenization units and the separator, and the processing module is further configured to:
perform reverse tokenization on the first processing result, and remove the separator, to obtain a second processing result of the text.

In a possible implementation, the text into which the separator is inserted further includes a protection character string, where the protection character string identifies a text having a same character as the separator in the text, and indicates that the text having the same character as the separator is not the separator.

In a possible implementation, the first processing result further includes the protection character string, and the processing module is further configured to:
removing the protection character string in the first processing result.

According to a third aspect, an embodiment of this application provides a data processing apparatus. The apparatus may include a memory, a processor, and a bus system. The memory is configured to store a program. The processor is configured to execute the program in the memory, to perform the method according to the first aspect and any optional method of the first aspect.

According to a fourth aspect, an embodiment of this application provides a computer-readable storage medium. The computer-readable storage medium stores a computer program, and when the computer program is run on a computer, the computer is enabled to perform the method according to the first aspect and any optional method of the first aspect.

According to a fifth aspect, an embodiment of this application provides a computer program. When the computer program is run on a computer, the computer is enabled to perform the method according to the first aspect and any optional method of the first aspect.

According to a sixth aspect, this application provides a chip system. The chip system includes a processor, configured to support a data processing apparatus in implementing functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete component.

### BRIEF DESCRIPTION OF DRAWINGS

FIG. 1A is a schematic diagram of a structure of an artificial intelligence main framework;
FIG. 1B and FIG. 1C are diagrams of application system frameworks according to the present invention;
FIG. 1D is a diagram of an optional hardware structure of a terminal;
FIG. 2 is a diagram of a structure of a server;
FIG. 3 to FIG. 5 are diagrams of a system architecture according to this application;
FIG. 6 shows a cloud service procedure;
FIG. 7 shows a cloud service procedure;
FIG. 8 is a schematic flowchart of a data processing method according to an embodiment of this application;
FIG. 9 is a schematic flowchart of a data processing method according to an embodiment of this application;
FIG. 10 is a diagram of a structure of a data processing apparatus according to an embodiment of this application;
FIG. 11 is a diagram of a structure of an execution device according to an embodiment of this application;
FIG. 12 is a diagram of a structure of a training device according to an embodiment of this application; and
FIG. 13 is a diagram of a structure of a chip according to an embodiment of this application.

### DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

The terms "substantially (substantially)", "about (about)", and the like used in this specification are approximation terms rather than degree terms, and are intended to take into account inherent deviations of measured values or calculated values that will be known to a person of ordinary skill in the art. In addition, in descriptions of embodiments of the present invention, "may (may)" indicates "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term " exemplary (exemplary)" is intended to indicate an example or an illustration.

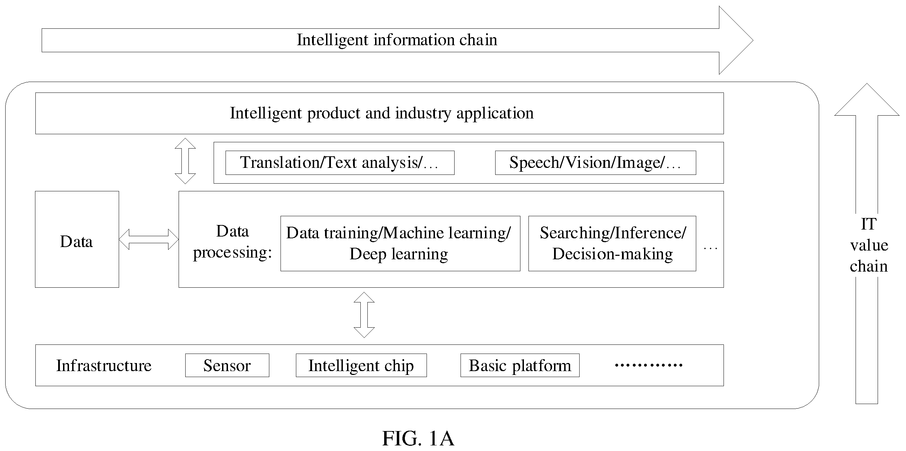

First, an overall working process of an artificial intelligence system is described. Refer to FIG. 1A. FIG. 1A shows a schematic diagram of a structure of an artificial intelligence main framework. The following describes the foregoing artificial intelligence theme framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. Communication is implemented with the external world through a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the artificial intelligence field. The data relates to a graph, an image, a speech, and a text, further relates to Internet of Things data of a conventional device, and includes service data of an existing system and perception data such as force, displacement, a liquid level, a temperature, and humidity.

### (3) Data processing

Data processing usually includes data training, machine learning, deep learning, searching, inference, decision making, and the like.

Machine learning and deep learning may mean performing symbolic and formal intelligent information modeling, extraction, preprocessing, training, and the like on data.

Inference is a process in which human-like intelligent inference is simulated in a computer or an intelligent system, and machine thinking and problem solving are performed by using formal information according to an inference control policy. A typical function is searching and matching.

Decision making is a process of making a decision after intelligent information is inferred, and usually provides functions such as classification, ranking, and prediction.

### (4) General capability

After the foregoing data processing is performed on data, some general capabilities may be further formed based on a data processing result. For example, the general capability may be an algorithm or a general system, for example, translation, text analysis, computer vision processing, speech recognition, and image recognition.

### (5) Intelligent product and industry application

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include smart terminals, smart transportation, smart health care, autonomous driving, smart cities, and the like.

This application may be applied to the field of natural language processing in the field of artificial intelligence. The following uses natural language processing as an example to describe a plurality of application scenarios implemented in products.

Application scenarios of this application are first described. This application may be but is not limited to being applied to an application program (which may be referred to as a natural language processing application program below) having a natural language processing function, a cloud service provided by a cloud-side server, or the like. The following separately describes the application scenarios.

### 1. A natural language processing application program

A product form in embodiments of this application may be a natural language processing application program. The natural language processing application program may run on a terminal device or a cloud-side server.

In a possible implementation, the natural language processing application program may implement a natural language processing task, for example, a digest generation task, a text reply task, or a text generation task.

It should be understood that natural language processing may be implemented based on a language model, and this application may be more specifically applied to a tokenization processing process before the language model is input.

In a possible implementation, a user may start the natural language processing application program installed on the terminal device, and input a text. The natural language processing application program may obtain a natural language processing result by using the method provided in embodiments of this application, and present the natural language processing result to the user (where a presentation manner may be but is not limited to displaying, saving, or uploading to a cloud side).

In a possible implementation, a user may start the natural language processing application program installed on the terminal device, and input a text. The natural language processing application program may perform natural language processing on the text by using the method provided in embodiments of this application, and present a natural language processing result to the user (where a presentation manner may be but is not limited to displaying, saving, or uploading to a cloud side).

In a possible implementation, a user may start the natural language processing application program installed on the terminal device, and input a text. The natural language processing application program may send the text to the cloud-side server. The cloud-side server processes the text by using the method provided in embodiments of this application, and sends a natural language processing result back to the terminal device. The terminal device may present the natural language processing result to the user (where a presentation manner may be but is not limited to displaying, saving, or uploading to a cloud side).

In a possible implementation, a user may start the natural language processing application program installed on the terminal device, and input a text. The natural language processing application program may send the text to the cloud-side server. The cloud-side server performs natural language processing on the text by using the method provided in embodiments of this application, and sends a natural language processing result back to the terminal device. The terminal device may present the natural language processing result to the user (where a presentation manner may be but is not limited to displaying, saving, or uploading to a cloud side).

The following describes the natural language processing application program in embodiments of this application separately from perspectives of a functional architecture and a product architecture for implementing a function.

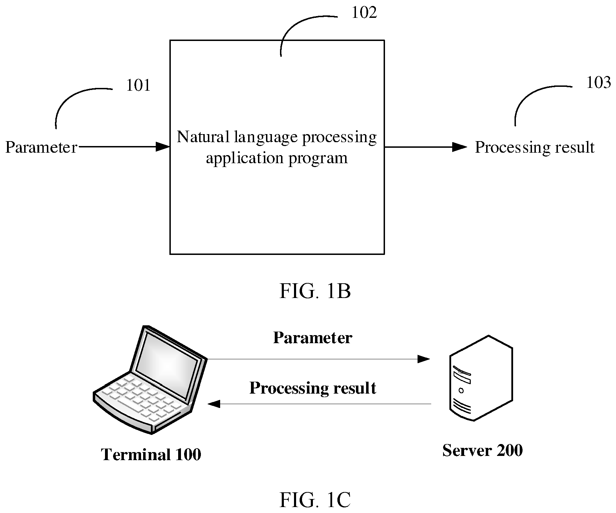

Refer to FIG. 1B. FIG. 1B is a diagram of a functional architecture of a natural language processing application program according to an embodiment of this application.

In a possible implementation, as shown in FIG. 1B, the natural language processing application program 102 may receive an input parameter 101 (for example, including a text) and generate a predicted text or a text natural language processing result 103. The natural language processing application program 102 may be executed (for example) in at least one computer system, and includes the computer text. When the computer text is executed by one or more computers, the computer is enabled to execute a natural language model obtained through training by using the method provided in this embodiment of this application.

Refer to FIG. 1C. FIG. 1C is a diagram of a physical architecture for running a natural language processing application program according to an embodiment of this application.

Refer to FIG. 1C. FIG. 1C is a diagram of an architecture of a system. The system may include a terminal 100 and a server 200. The server 200 may include one or more servers (in FIG. 1C, an example in which one server is included is used for description), and the server 200 may provide a natural language processing function service for one or more terminals.

A natural language processing application program may be installed on the terminal 100, or a web page related to the natural language processing function may be opened. The application program and the web page may provide an interface. The terminal 100 may receive a related parameter input by a user on the interface of the natural language processing function, and send the parameter to the server 200. The server 200 may obtain a processing result based on the received parameter, and send the processing result back to the terminal 100.

It should be understood that, in some optional implementations, the terminal 100 may alternatively autonomously complete an action of obtaining the processing result based on the received parameter, without cooperation of the server. This is not limited in embodiments of this application.

The following describes a product form of the terminal 100 in FIG. 1C.

In embodiments of this application, the terminal 100 may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

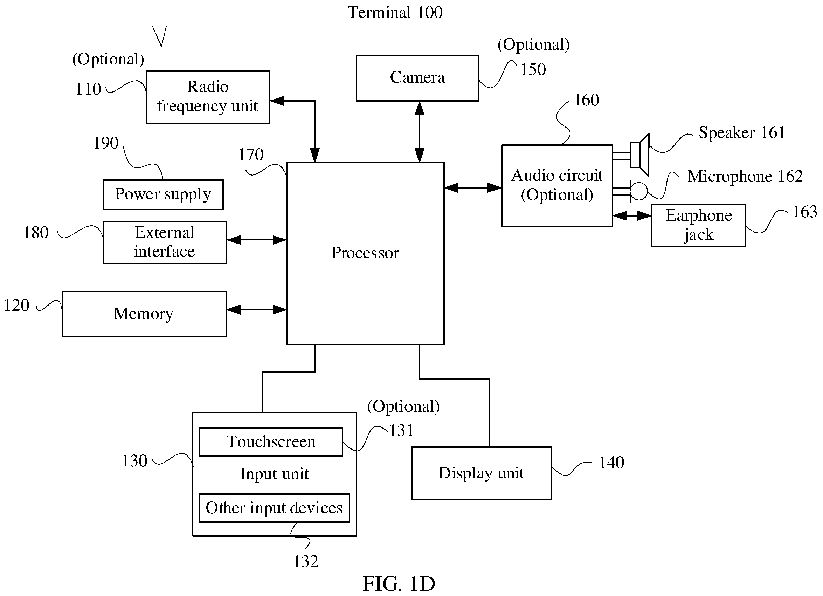

FIG. 1D shows a diagram of an optional hardware structure of the terminal 100.

As shown in FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art can understand that FIG. 1D is merely an example of the terminal or a multi-functional device but constitutes no limitation on the terminal or the multi-functional device. The terminal or the multi-functional device may include more or fewer components than those shown in the figure, may combine some components, or may use different components.

The input unit 130 may be configured to receive input digital or character information, and generate a key signal input related to a user setting and function control of the portable multi-functional apparatus. Specifically, the input unit 130 may include a touchscreen 131 (optional) and/or other input devices 132. The touchscreen 131 may collect a touch operation performed by a user on or near the touchscreen 131 (for example, an operation performed by the user on or near the touchscreen by using any proper object such as a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive a command sent by the processor 170 and execute the command. The touch signal includes at least touch point coordinate information. The touchscreen 131 may provide an input interface and an output interface between the terminal 100 and the user. In addition, the touchscreen may be implemented in a plurality of types such as a resistive type, a capacitive type, an infrared ray type, and a surface acoustic wave type. In addition to the touchscreen 131, the input unit 130 may include the another input device. Specifically, the other input devices 132 may include but are not limited to one or more of the following: a physical keyboard, a functional key (for example, a volume control key 132 or an on/off key 133), a trackball, a mouse, a joystick, and the like.

The input device 132 may receive an input text, processing instruction and the like.

The display unit 140 may be configured to display information input by the user, information provided for the user, various menus of the terminal 100, an interaction interface, a file, and/or playing of any multimedia file. In this embodiment of this application, the display unit 140 may be configured to display an interface of a natural language processing application program.

The memory 120 may be configured to store instructions and data. The memory 120 may mainly include an instruction storage area and a data storage area. The data storage area may store various types of data such as a multimedia file and text. The instruction storage area may store software units such as an operating system, an application, and instructions for at least one function, or subsets and extended sets thereof. The memory 120 may further include a non-volatile random access memory, and provide hardware, software, a data resource, and the like in a management and computation processing device to the processor 170, to support control on software and an application. The memory 120 is further configured to: store a multimedia file, and run a program and store an application.

The processor 170 is a control center of the terminal 100, connects various parts of the entire terminal 100 through various interfaces and lines, and performs various functions of the terminal 100 and processes data by running or executing the instructions stored in the memory 120 and invoking the data stored in the memory 120, to implement overall control on the terminal device. Optionally, the processor 170 may include one or more processing units. Preferably, an application processor and a modem processor may be integrated into the processor 170. The application processor mainly processes an operating system, a user interface, an application program, and the like. The modem processor mainly processes wireless communication. It can be understood that the modem processor may not be integrated into the processor 170. In some embodiments, the processor and the memory may be implemented on a single chip. In some embodiments, the processor and the memory may be implemented on separate chips. The processor 170 may be further configured to: generate a corresponding operation control signal, and send the operation control signal to a corresponding component in the computation processing device, and read and process data in software, especially read and process the data and the program in the memory 120, so that function modules perform corresponding functions, to control a corresponding component to perform an operation as required by an instruction.

The memory 120 may be configured to store a software text related to a data processing method. The processor 170 may perform steps of a data processing method of a chip, or may schedule another unit (for example, the input unit 130 and the display unit 140) to implement a corresponding function.

The radio frequency unit 110 (optional) may be configured to send and receive signals in an information sending/receiving process or a call process, for example, receive downlink information from a base station and then send the downlink information to the processor 170 for processing, or send uplink-related data to a base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. Any communication standard or protocol may be used for the wireless communication, including but not limited to a global system for mobile communication (Global System for Mobile Communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In this embodiment of this application, the radio frequency unit 110 may send the text to the server 200, and receive a predicted text or a natural language processing result sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 through a power management system, to implement functions such as charging and discharging management and power consumption management through the power management system.

The terminal 100 further includes the external interface 180. The external interface may be a standard micro USB interface or a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of methods described below may be applied to the terminal 100 shown in FIG. 1D.

The following describes a product form of the server 200 in FIG. 1C.

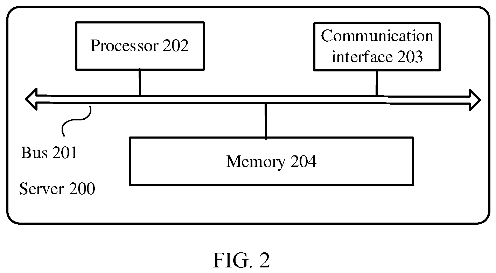

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used to represent the bus in FIG. 2, but this does not mean that there is only one bus or only one type of bus.

The processor 202 may be any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 204 may include a volatile memory (volatile memory), for example, a random access memory (random access memory, RAM). The memory 204 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store a software text related to a data processing method. The processor 202 may perform steps of a data processing method of a chip, or may schedule another unit to implement a corresponding function.

It should be understood that the terminal 100 and the server 200 may be centralized or distributed devices. A processor (for example, the processor 170 and the processor 202) in the terminal 100 and the server 200 may be a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the processor may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

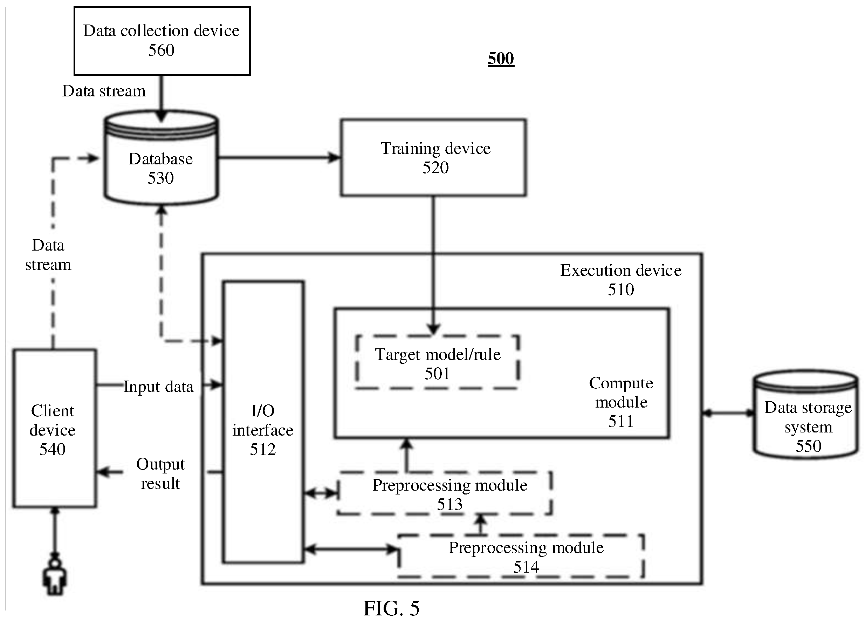

It should be understood that steps related to a model inference process in embodiments of this application relate to an AI-related operation. When the AI operation is performed, an instruction execution architecture of the terminal device and the server is not limited to the foregoing architecture in which the processor and the memory are combined. A system architecture provided in embodiments of this application is described below in detail with reference to FIG. 5.

FIG. 5 is a diagram of a system architecture according to an embodiment of this application. As shown in FIG. 5, the system architecture 500 includes an execution device 510, a training device 520, a database 530, a client device 540, a data storage system 550, and a data collection system 560.

The execution device 510 includes a compute module 511, an I/O interface 512, a preprocessing module 513, and a preprocessing module 514. The compute module 511 may include a target model/rule 501, and the preprocessing module 513 and the preprocessing module 514 are optional.

The execution device 510 may be the terminal device or the server that runs the natural language processing application program.

The data collection device 560 is configured to collect a training sample. The training sample may be a text or the like. After collecting the training sample, the data collection device 560 stores the training sample in the database 530.

The training device 520 may maintain the training sample in the database 530, and pretrain a to-be-trained neural network (for example, the language model in this embodiment of this application) to obtain the target model/rule 501.

It should be noted that in an actual application, the training sample maintained in the database 530 is not necessarily collected by the data collection device 560, and may be received from another device. In addition, it should be noted that the training device 520 does not necessarily completely train the target model/rule 501 based on the training sample maintained in the database 530, and may perform model training by obtaining a training sample from a cloud or another position. The foregoing descriptions should not be construed as a limitation on this embodiment of this application.

The target model/rule 501 obtained through training by the training device 520 may be applied to different systems or devices, for example, applied to the execution device 510 shown in FIG. 5. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 5, the execution device 510 is provided with the input/output (input/output, I/O) interface 512, configured to exchange data with an external device. A user may input data (for example, input the text in this embodiment of this application) to the I/O interface 512 by using the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the input data may be processed directly by using the compute module 511.

When the execution device 510 preprocesses the input data, or when the compute module 511 in the execution device 510 performs a related processing process such as computation, the execution device 510 may invoke data, a text, and the like in the data storage system 550 for corresponding processing, or may store data, instructions, and the like obtained through corresponding processing in the data storage system 550.

Finally, the I/O interface 512 provides a processing result for the client device 540, to provide the processing result for the user.

In the case shown in FIG. 5, the user may manually provide the input data, and "manually providing the input data" may be implemented through an operation on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner, for example, display, sound, or an action. The client device 540 may also be used as a data collection terminal, collect the input data that is input to the I/O interface 512 and that is shown in the figure and the output result output from the I/O interface 512, use the input data and the output result as new sample data, and store the new sample data in the database 530. Certainly, alternatively, the client device 540 may not perform collection, and the I/O interface 512 directly uses the input data that is input to the I/O interface 512 and that is shown in the figure and the output result output from the I/O interface 512 as new sample data, and stores the new sample data in the database 530.

It should be noted that FIG. 5 is merely a diagram of a system architecture according to an embodiment of this application. A positional relationship between devices, components, modules, and the like shown in the figure does not constitute any limitation. For example, in FIG. 5, the data storage system 550 is an external memory relative to the execution device 510. In another case, the data storage system 550 may alternatively be deployed in the execution device 510. It should be understood that the execution device 510 may be deployed in the client device 540.

Details from a perspective of model inference are as follows:
In this embodiment of this application, the compute module 511 in the execution device 510 may obtain the text stored in the data storage system 550, to implement steps related to a model inference process in this embodiment of this application.

In embodiments of this application, the compute module 511 in the execution device 510 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

Specifically, the compute module 511 in the execution device 510 may be a hardware system with an instruction execution function. The steps related to the model inference process provided in embodiments of this application may be a software text stored in a memory. The compute module 511 in the execution device 510 may obtain the software text from the memory, and execute the obtained software text to implement the steps related to the model inference process provided in embodiments of this application.

It should be understood that the compute module 511 in the execution device 510 may be a combination of a hardware system without an instruction execution function and a hardware system with an instruction execution function. Some of the steps related to the model inference process provided in embodiments of this application may be implemented by the hardware system without an instruction execution function in the compute module 511 in the execution device 510. This is not limited herein.

Details from a perspective of model training are as follows:
In embodiments of this application, the training device 520 may obtain a text stored in a memory (which is not shown in FIG. 5, and may be integrated into the training device 520 or deployed separately from the training device 520), to implement steps related to model training in embodiments of this application.

In embodiments of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

It should be understood that the training device 520 may be a combination of a hardware system without an instruction execution function and a hardware system with an instruction execution function. Some of the steps related to model training provided in embodiments of this application may be implemented by the hardware system without an instruction execution function in the training device 520. This is not limited herein.

2. Natural language processing function cloud service provided by a server:
In a possible implementation, the server may provide a natural language processing function service for a terminal side through an application programming interface (application programming interface, API).

A terminal device may send a related parameter (for example, a text) to the server through an API provided by a cloud. The server may obtain a processing result based on the received parameter, and send the processing result back to the terminal.

For descriptions of the terminal and the server, refer to the descriptions in the foregoing embodiments. Details are not described herein again.

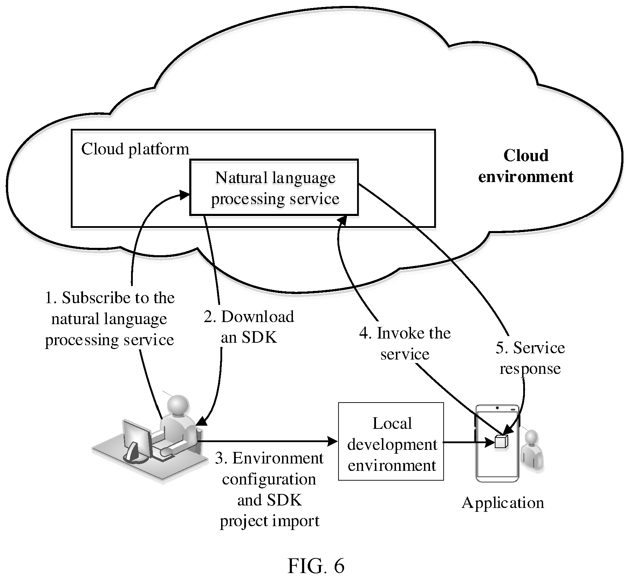

FIG. 6 shows a procedure of using a natural language processing function cloud service provided by a cloud platform.
1. Subscribe to and purchase a natural language processing service.
2. A user may download a software development kit (software development kit, SDK) corresponding to a content review service. Usually, the cloud platform provides SDKs of a plurality of development versions for the user to select based on a development environment requirement, for example, a Java-version SDK, a Python-version SDK, a PHP-version SDK, and an Android-version SDK.
3. After locally downloading an SDK of a corresponding version as required, the user imports an SDK project to a local development environment, and performs configuration and debugging in the local development environment. Another function may be further developed in the local development environment, to form an application that integrates a natural language processing function capability.
4. During use of a natural language processing function application, when the natural language processing function is required, an API invocation for the natural language processing function may be triggered. When an application triggers the natural language processing function, an API request is initiated to a running instance of the natural language processing function service in a cloud environment. The API request carries a text, and the running instance in the cloud environment processes the text to obtain a processing result.
5. The cloud environment sends the processing result back to the application. In this way, the invocation of the natural language processing function service is completed once.

3. A tokenization cloud service provided by a server:
In a possible implementation, the server may provide a tokenization function service for a terminal side through an application programming interface (application programming interface, API).

A terminal device may send a related parameter (for example, a text) to the server through an API provided by a cloud. The server may obtain a processing result based on the received parameter, and send the processing result back to the terminal.

For descriptions of the terminal and the server, refer to the descriptions in the foregoing embodiments. Details are not described herein again.

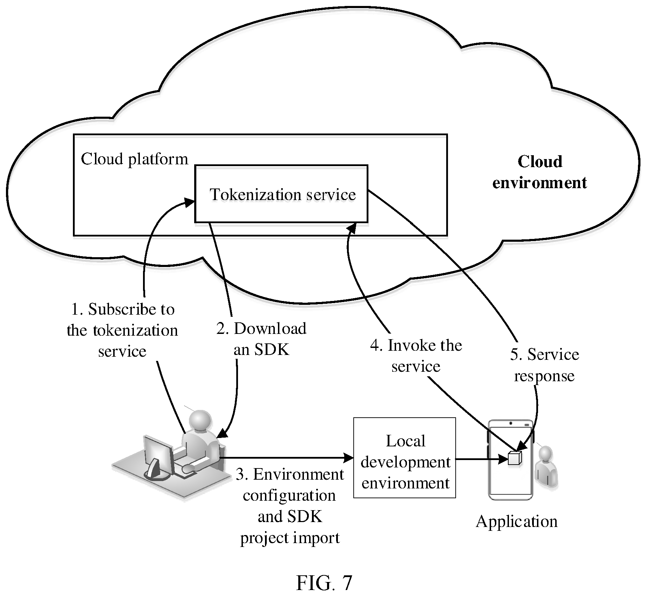

FIG. 7 shows a procedure of using a tokenization function cloud service provided by a cloud platform.
1. Subscribe to and purchase the tokenization service.
2. A user may download a software development kit (software development kit, SDK) corresponding to a content review service. Usually, the cloud platform provides SDKs of a plurality of development versions for the user to select based on a development environment requirement, for example, a Java-version SDK, a Python-version SDK, a PHP-version SDK, and an Android-version SDK.
3. After locally downloading an SDK of a corresponding version as required, the user imports an SDK project to a local development environment, and performs configuration and debugging in the local development environment. Another function may be further developed in the local development environment, to form an application that integrates a tokenization function capability.
4. When the tokenization function is used, an API invocation of the tokenization function can be triggered if the tokenization function is required. When the application triggers the tokenization function, an API request is initiated to a running instance of a tokenization function service in a cloud environment, where the API request carries a text, and the running instance in the cloud environment processes the text to obtain a processing result.
5. The cloud environment sends the processing result back. In this way, a service invocation of the tokenization function is completed once.

For descriptions of the terminal and the server, refer to the descriptions in the foregoing embodiments. Details are not described herein again.

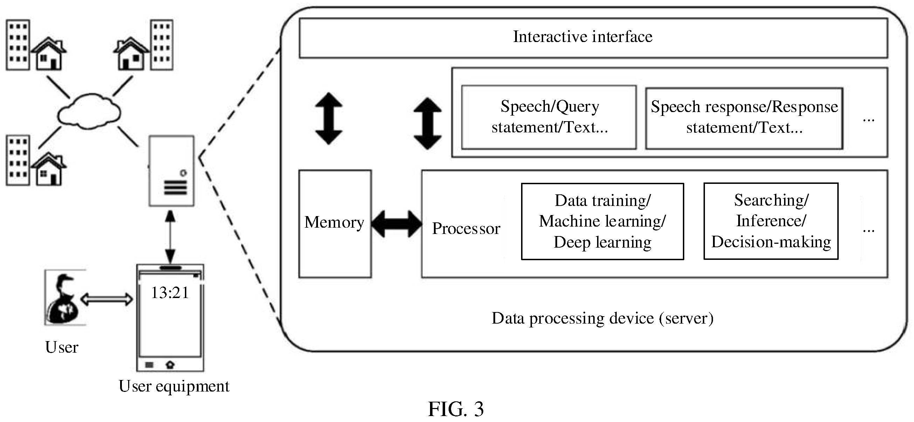

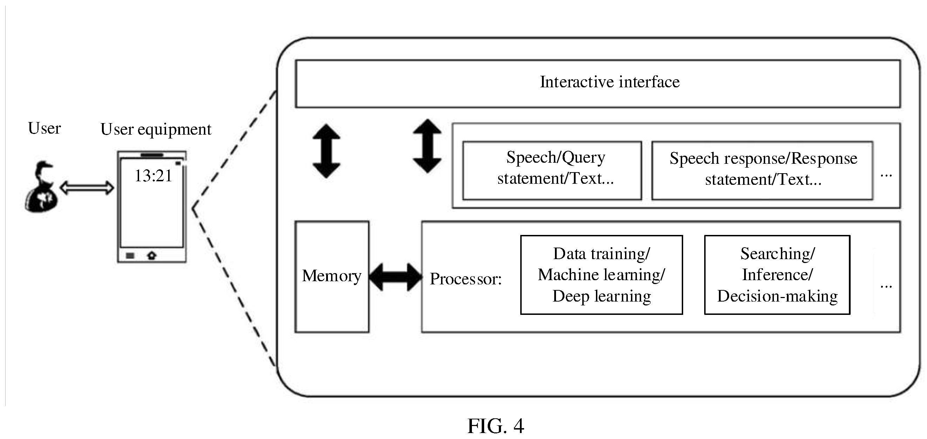

To better understand the solutions in embodiments of this application, the following briefly describes a possible application scenario in embodiments of this application with reference to FIG. 3 and FIG. 4.

FIG. 3 shows a natural language processing system. The natural language processing system includes user equipment and a data processing device. The user equipment includes an intelligent terminal, for example, a mobile phone, a personal computer, or an information processing center. The user equipment is an initiator of natural language data processing. As an initiator of a request for language questioning and answering, querying, or the like, a user usually initiates the request by using the user equipment.

The data processing device may be a device or a server that has a data processing function, for example, a cloud server, a network server, an application server, and a management server. The data processing device receives a query statement/speech/text or the like from the intelligent terminal through an interaction interface; then performs, by using a memory storing data and a processor processing data, language data processing in a manner of machine learning, deep learning, searching, inference, decision-making, or the like; and feeds back a processing result to the user equipment. The memory in the data processing device may be a collective term, and includes a local storage and a database for storing historical data. The database may be deployed on the data processing device or another network server.

In the natural language processing system shown in FIG. 3, the user equipment may receive an instruction of the user. For example, the user equipment may receive a text segment input by the user, and then initiate a request to the data processing device, so that the data processing device executes a natural language processing application (for example, natural language generation, text classification, text inference, named entity recognition, or translation) on the text segment obtained by the user equipment, to obtain a processing result (for example, a predicted word result, a classification result, an inference result, a named entity recognition result, or a translation result) of the corresponding natural language processing application for the text segment.

In this embodiment of this application, the user equipment may receive an instruction of the user. For example, the user equipment may receive a text segment (for example, a text) entered by the user, and then initiate a request to the data processing device, so that the data processing device executes a natural language processing application for the text segment obtained by the user equipment, to obtain a processing result of the natural language processing application corresponding to the text segment.

FIG. 4 shows another natural language processing system. In FIG. 4, user equipment directly serves as a data processing device. The user equipment can directly receive an input from a user, and the input is directly processed by using hardware of the user equipment. A specific process is similar to that in FIG. 3. Refer to the foregoing descriptions. Details are not described herein again.

Embodiments of this application relate to massive application of a neural network. For ease of understanding, the following first describes terms and concepts related to the neural network in embodiments of this application.

### (1) Neural network

The neural network may include a neuron. The neuron may be an operation unit that uses xs (namely, input data) and an intercept of 1 as an input. An output of the operation unit may be as follows: ${h}_{W , b} \left(x\right) = f \left({W}^{T}x\right) = f \left({\sum }_{s = 1}^{n} {W}_{s} {x}_{s} + b\right) ;$

Herein, s=1, 2, ..., and n, n is a natural number greater than 1, Ws is a weight of xs, b is a bias of the neuron. f represents an activation function (activation function) of the neuron and is used to introduce a non-linear characteristic into the neural network, to convert an input signal in the neuron into an output signal. The output signal of the activation function may be used as an input of a next convolutional layer, and the activation function may be a sigmoid function. The neural network is a network formed by joining a plurality of single neurons together. To be specific, an output of a neuron may be an input of another neuron. An input of each neuron may be connected to a local receptive field of a previous layer to extract a feature of the local receptive field. The local receptive field may be a region including several neurons.

### (2) Transformer layer

A neural network includes an embedding layer and at least one transformer layer. The at least one transformer layer may be N transformer layers (N is an integer greater than 0), and each transformer layer includes an attention layer, an add and norm (add & norm) layer, a feed forward (feed forward) layer, and an add and norm layer that are sequentially adjacent to each other. At the embedding layer, embedding processing is performed on a current input to obtain a plurality of embedding vectors. At the attention layer, P input vectors are obtained from a previous layer of the first transformer layer. Any first input vector in the P input vectors is used as a center. An intermediate vector corresponding to the first input vector is obtained based on an association degree between the first input vector and each input vector within a preset attention window range. In this way, P intermediate vectors corresponding to the P input vectors are determined. At a pooling layer, the P intermediate vectors are combined into Q output vectors. A plurality of output vectors obtained from the last transformer layer of the transformer layer are used as feature representations of the current input.

### (3) Attention mechanism (attention mechanism)

The attention mechanism simulates an internal process of an observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in a natural language processing task, especially machine translation. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula:
Herein, Lx=∥Source∥ represents a length of Source. The formula means that constituent elements in Source are assumed to include a series of data pairs. In this case, an element Query in a target Target is provided, similarity or a correlation between Query and each Key is calculated to obtain a weight coefficient of Value corresponding to each Key, and then weighted summation is performed on Value, to obtain a final Attention value. Therefore, in essence, the Attention mechanism is to perform weighted summation on Value of the elements in Source, and Query and Key are used to calculate a weight coefficient of a corresponding Value. Conceptually, Attention may be understood as selecting a small amount of important information from a large amount of information, focusing on the important information, and ignoring most of unimportant information. A process of focusing is reflected in calculation of the weight coefficient. A greater weight indicates that Value corresponding to the weight is more focused, that is, the weight indicates importance of information, and Value is the information corresponding to the weight. The self-attention mechanism may be understood as an intra-attention (intra-attention) mechanism. The Attention mechanism occurs between the element Query in Target and all the elements in Source. The self-attention mechanism is an Attention mechanism that occurs between elements in Source or between elements in Target, and may also be understood as an attention calculation mechanism in a special case of Target=Source. A specific calculation process of the self-attention mechanism is the same except that a calculation object changes.

### (4) Natural language processing (natural language processing, NLP)

A natural language (natural language) is a human language, and natural language processing (NLP) is processing of the human language. Natural language processing is a process of systematic analysis, understanding, and information extraction of text data in an intelligent and efficient manner. By using NLP and components of NLP, massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

### (5) Pre-trained language model (pre-trained language model)

A pre-trained language model is a natural language sequence encoder, and encodes each word in a natural language sequence into a vector representation to perform a prediction task. Training for the pre-trained language model includes two stages. At a pre-training (pre-training) stage, the model is trained for a language model task on a large scale of an unsupervised text to learn a word representation. At a fine tuning (fine tuning) stage, the model is initialized by using parameters learned at the pre-training stage, and is trained in few steps on downstream tasks (downstream tasks) such as text classification (text classification) and sequence labeling (sequence labeling), so that semantic information obtained through pre-training can be successfully migrated to the downstream tasks.

### (6) Back propagation algorithm

A convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

### (7) Loss function

In a process of training a deep neural network, because it is expected that an output of the deep neural network is maximally close to an actually predicted value, a current predicted value of the network may be compared with a target value that is expected, and then a weight vector at each layer of the neural network is updated based on a difference between the current predicted value and the target value (there is usually an initialization process before the first update, in other words, a parameter is preconfigured for each layer of the deep neural network). For example, if the predicted value of the network is large, the weight vector is adjusted to lower the predicted value until the deep neural network can predict the target value that is actually expected or a value close to the target value that is actually expected. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

### (8) Text sequence (text sequence)

A text sequence is a sequence of characters, for example a segment of natural language text or a segment of program code.

### (9) Vocabulary (vocabulary)

A vocabulary refers to a list of words used by a language model. Each word is a character string of any length without a space, for example, a complete natural language word or a part of a complete word (also called a sub-word).

### (10) Out of vocabulary (out of vocabulary)

An out-of-vocabulary word is a word that does not appear in a vocabulary when a language model performs inferences.

### (11) Text tokenization (text tokenization)

Text tokenization is a technology that segments a text sequence according to a specific rule to reduce occurrence possibility of an out-of-vocabulary word.

In an existing natural language processing system, Byte Pair Encoding (BPE) or the SentencePiece algorithm is used to process an input text, and character strings bound by a space in the text are segmented according to a specific rule. The aim is to significantly reduce occurrence of an out-of-vocabulary word and improve generalization and fault tolerance of a language model during inference. If segmentation is not performed, all words included in a language need to appear in the training text. Otherwise, a word that does not appear (for example, a spelling error) is processed as an out-of-vocabulary word during inference, and fault tolerance and inference capabilities of the language model are greatly affected. In addition, without tokenization, some words that have a same source but have different word types are considered as independent by the language model. As a result, semantics shared by the words cannot be fully acquired, and a generalization capability of the language model is reduced.

However, the algorithms focus more on how to obtain better sub-word distribution by establishing a mathematical model, and (partially) ignore inconsistency caused by a feature of a language to tokenization, that is, a same word may have different tokenization results in different scenarios. A common solution is to introduce a pre-text (post-text) processing module before (after) tokenization. Although the solution can well resolve a problem of inconsistency, noise is often introduced to cause lossy tokenization, that is, the input text cannot be restored after text preprocessing, tokenization, reverse tokenization, and text post-processing.

To resolve the foregoing problems, embodiments of this application provide a data processing method. The following describes in detail the data processing method in embodiments of this application with reference to accompanying drawings.

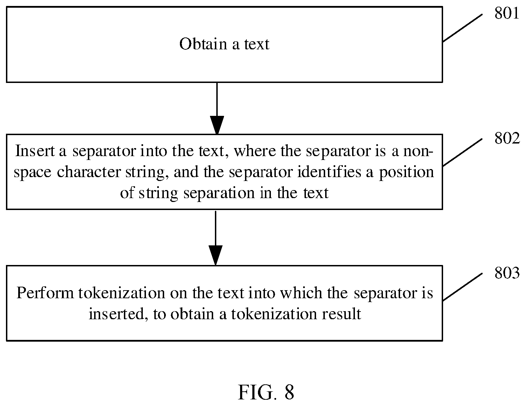

Refer to FIG. 8. FIG. 8 is a schematic flowchart of a data processing method according to an embodiment of this application. As shown in FIG. 8, the data processing method provided in this embodiment of this application may include steps 801 to 803. The following separately describes these steps in detail.

801. Obtain a text.

In a possible implementation, the first text may be a text on which tokenization processing needs to be performed, or a text on which natural language processing needs to be performed subsequently. The text may also be referred to as a text sequence, and includes a plurality of characters and a character string.

802. Insert a separator into the text. The separator is a non-space character string, and the separator identifies a position of string separation in the text.

In the prior art, a space used as the separator is inserted at a corresponding position of the text, to improve tokenization consistency in different scenarios. Although the space used as the separator is simple and convenient, because the space is completely the same as a natural space in form, a post-processing algorithm cannot accurately delete the inserted space in some scenarios, and consequently an original text sequence cannot be completely restored, causing lossy tokenization.

In this embodiment of this application, a non-space character string (or may be referred to as a character string that is not entirely spaces) is defined as the separator. For example, the character string that starts with one or more non-space characters and ends with one or more space characters is used as the separator. Because the non-space character is less common than the space in a natural language, the inserted separator can be accurately deleted during post-processing, to implement lossless tokenization.

For example, the separator may be a character corresponding to source code " \u2582 ". The character may be a lower quarter block element.

In a possible implementation, the non-space character string may be added to a tokenization model as the separator. For example, the character in the text may be identified one by one to determine whether the character meets an insertion condition of the separator.

When the tokenization is performed on the text based on the tokenization model, the separator may be first inserted into the text. For example, in a possible implementation, the separator may be inserted into an adjacent position after a punctuation mark included in the text. That is, the punctuation mark (including beginning of a sentence) can be immediately followed by a word position, and the separator can be inserted after the punctuation mark.

For example, in a possible implementation, the separator may be inserted at a position at which different languages switch and that is not separated by a space in the text. That is, the separator is inserted between the two languages at the position at which the different languages switch and that is not separated by a space.

For example, in a possible implementation, the separator may be inserted at an adjacent position after a last space of consecutive spaces included in the text. That is, the separator is inserted after the last space at the position of the consecutive spaces.

In a possible implementation, a character string having a same character as the separator may also exist in the text. However, the character string belongs to the text and is not used as the separator. During post-processing, the character string should not be deleted. Therefore, the character string having the same character as the separator may be protected in the text, that is, a character string embedding structure is constructed to protect a non-space character part that appears in the separator in the input text, to form a protection character string. Further, the text into which the separator is inserted further includes the protection character string, where the protection character string identifies a text having the same character as the separator in the text, and indicates that the text having the same character as the separator is not the separator.

803. Perform tokenization on the text into which the separator is inserted, to obtain a tokenization result.

The tokenization result may include a plurality of tokenization units, and by using the foregoing separator design, a same tokenization result can also be obtained in different scenarios.

In a possible implementation, a first processing result of the text may be further obtained based on the tokenization result by using a language model. The first processing result includes a plurality of tokenization units and the separator. To obtain a processing result corresponding to the text, post-processing may be performed on the first processing result. The post-processing may include but is not limited to reverse tokenization and separator removal, that is, reverse tokenization may be performed on the first processing result, and the separator may be removed to obtain a second processing result of the text.

In a possible implementation, the first processing result further includes the protection character string, and the post-processing may further include: removing the protection character string in the first processing result.

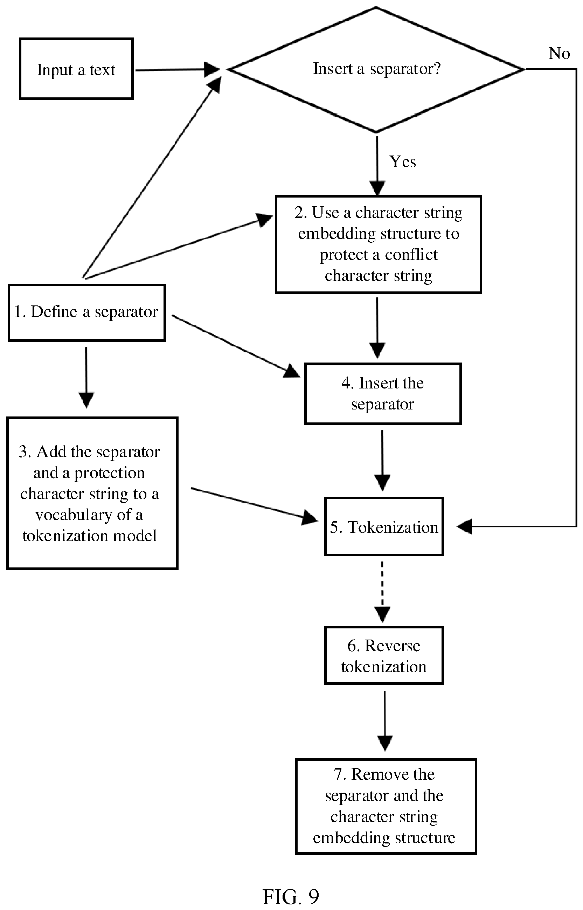

More specifically, refer to FIG. 9. FIG. 9 is a schematic flowchart of an embodiment of this application. FIG. 9 shows a process of inserting a separator and a protection character string, tokenization, and a post-processing process (including reverse tokenization, separator removal, and character string protection structure removal).

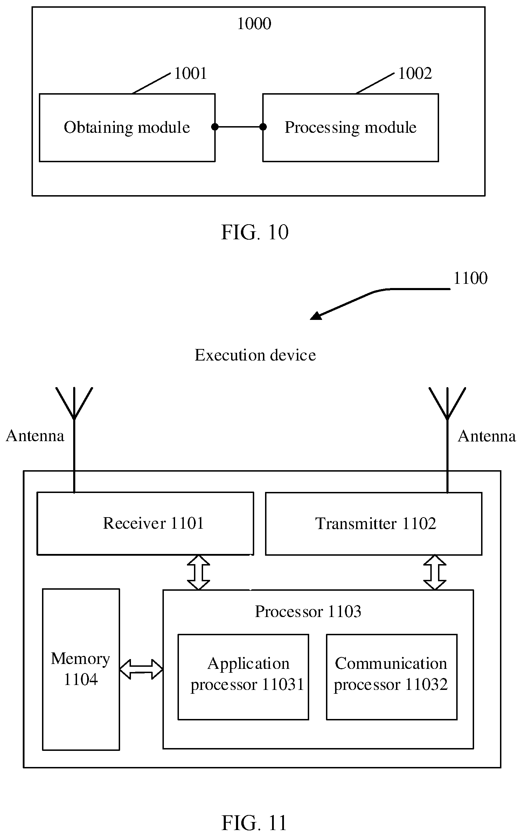

Refer to FIG. 10. FIG. 10 is a diagram of a structure of a data processing apparatus according to an embodiment of this application. As shown in FIG. 10, a data processing apparatus 1000 provided in this embodiment of this application includes:
an obtaining module 1001, configured to obtain a text, where
for specific descriptions of the obtaining module 1001, refer to the descriptions of step 801 in the foregoing embodiment, and details are not described herein again; and
a processing module 1002, configured to: insert a separator into the text, where the separator is a non-space character string, and the separator identifies a position of string separation in the text; and perform tokenization on the text into which the separator is inserted, to obtain a tokenization result, where
for specific descriptions of the processing module 1002, refer to descriptions of step 802 and step 803 in the foregoing embodiment, and details are not described herein again.

In a possible implementation, the separator is a character corresponding to source code " \u2582 ".

In a possible implementation, the processing module 1002 is specifically configured to:
insert the separator into the text based on at least one of the following apparatuses:
inserting the separator at an adjacent position after a punctuation mark included in the text;
inserting the separator at a position at which different languages switch and that is not separated by a space in the text; or
inserting the separator at an adjacent position after a last space of consecutive spaces included in the text.

In a possible implementation, the processing module 1002 is further configured to:
obtain a first processing result of the text based on the tokenization result by using a language model.

In a possible implementation, the first processing result includes a plurality of tokenization units and the separator, and the processing module 1002 is further configured to:
perform reverse tokenization on the first processing result, and remove the separator, to obtain a second processing result of the text.

In a possible implementation, the text into which the separator is inserted further includes a protection character string, where the protection character string identifies a text having a same character as the separator in the text, and indicates that the text having the same character as the separator is not the separator.

In a possible implementation, the first processing result further includes the protection character string, and the processing module 1002 is further configured to:
remove the protection character string in the first processing result.

The following describes an execution device provided in embodiments of this application. Refer to FIG. 11. FIG. 11 is a diagram of a structure of an execution device according to an embodiment of this application. The execution device 1100 may be specifically represented as a virtual reality VR device, a mobile phone, a tablet, a notebook computer, an intelligent wearable device, a monitoring data processing device, a server, or the like. This is not limited herein. Specifically, the execution device 1100 includes a receiver 1101, a transmitter 1102, a processor 1103, and a memory 1104 (there may be one or more processors 1103 in the execution device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data to the processor 1103. A part of the memory 1104 may further include a non-volatile random access memory (non-volatile random access memory, NVRAM). The memory 1104 stores processor and operation instructions, an executable module, a data structure, a subset thereof, or an extension set thereof. The operation instructions may include various operation instructions for implementing various operations.

The processor 1103 controls an operation of the execution device. During specific application, components of the execution device are coupled together through a bus system. In addition to a data bus, the bus system may include a power bus, a control bus, a status signal bus, and the like. However, for clear description, various types of buses in the figure are marked as the bus system.

The method disclosed in the foregoing embodiments of this application may be applied to the processor 1103, or implemented by the processor 1103. The processor 1103 may be an integrated circuit chip and has a signal processing capability. In an implementation process, each step of the foregoing method may be completed by using an integrated logic circuit of hardware in the processor 1103 or an instruction in a form of software. The processor 1103 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1104, and the processor 1103 reads information in the memory 1104 and completes steps related to the model inference process in the method in combination with hardware of the processor.

The receiver 1101 may be configured to: receive input digit or character information, and generate a signal input related to a related setting and function control of the execution device. The transmitter 1102 may be configured to output the digital or character information through a first interface. The transmitter 1102 may be further configured to send instructions to a disk group through the first interface, to modify data in the disk group. The transmitter 1102 may further include a display device like a display.

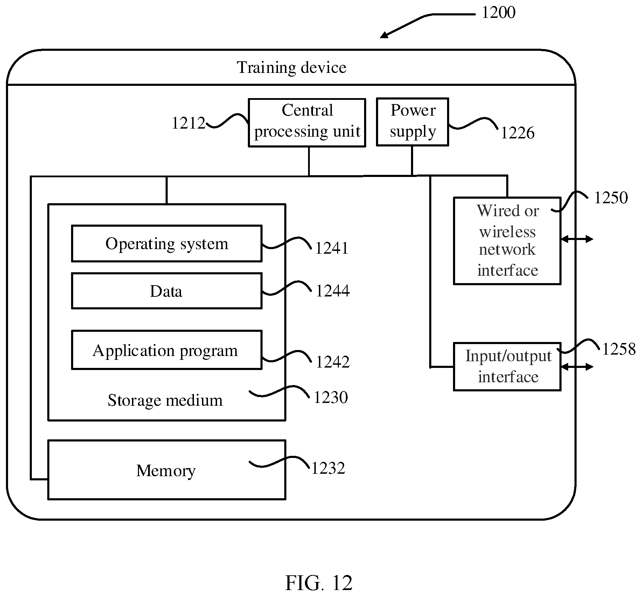

Embodiments of this application further provide a training device. Refer to FIG. 12. FIG. 12 is a diagram of a structure of a training device according to an embodiment of this application. Specifically, the training device 1200 is implemented by one or more servers, the training device 1200 may vary greatly with different configurations or performance, and may include one or more central processing units (central processing units, CPUs) 1212 (for example, one or more processors), a memory 1232, and one or more storage media 1230 (for example, one or more mass storage devices) that store an application program 1242 or data 1244. The memory 1232 and the storage medium 1230 may perform transitory storage or persistent storage. A program stored in the storage medium 1230 may include one or more modules (not shown in the figure), and each module may include a series of instruction operations for the training device. Further, the central processing unit 1212 may be configured to communicate with the storage medium 1230, to perform, on the training device 1200, a series of instruction operations in the storage medium 1230.

The training device 1200 may further include one or more power supplies 1226, one or more wired or wireless network interfaces 1250, one or more input/output interfaces 1258, or one or more operating systems 1241, for example, Windows ServerTM, Mac OS XTM, UnixTM, LinuxTM, and FreeBSDTM.

In this embodiment of this application, the central processing unit 1212 is configured to perform actions related to model training in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

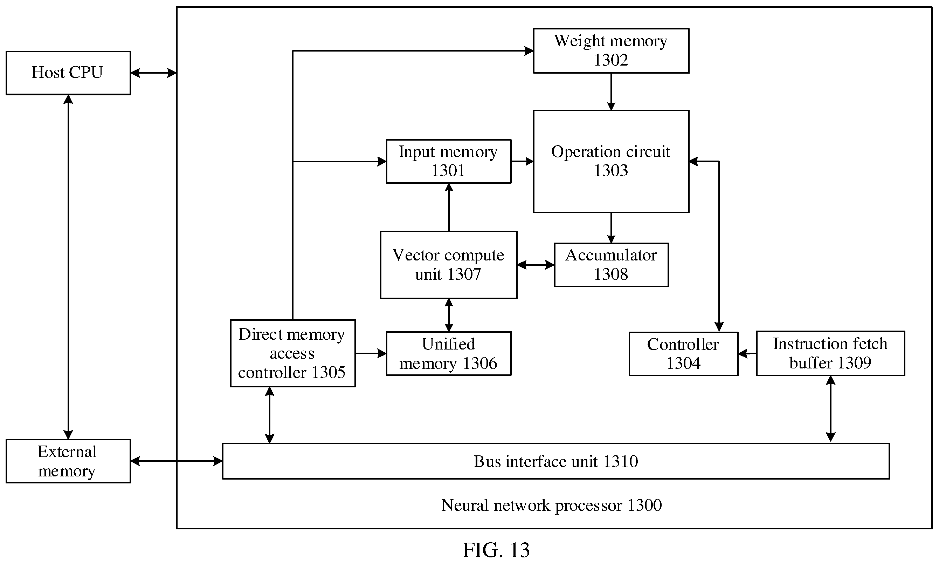

Specifically, refer to FIG. 13. FIG. 13 is a diagram of a structure of a chip according to an embodiment of this application. The chip may be represented as a neural-network processing unit NPU 1300. The NPU 1300 is mounted to a host CPU (Host CPU) as a coprocessor, and the host CPU allocates a task to the NPU. A core part of the NPU is an operation circuit 1303, and a controller 1304 controls the operation circuit 1303 to extract matrix data in a memory and perform a multiplication operation.

In some implementations, the operation circuit 1303 includes a plurality of processing units (Process Engines, PE). In some implementations, the operation circuit 1303 is a twodimensional systolic array. The operation circuit 1303 may alternatively be a one-dimensional systolic array or another electronic circuit capable of performing mathematical operations such as multiplication and addition. In some implementations, the operation circuit 1303 is a general-purpose matrix processor.

For example, it is assumed that there is an input matrix A, a weight matrix B, and an output matrix C. The operation circuit fetches, from a weight memory 1302, data corresponding to the matrix B, and buffers the data on each PE in the operation circuit. The operation circuit fetches data of the matrix A from an input memory 1301 to perform a matrix operation on the matrix B, and stores an obtained partial result or an obtained final result of the matrix into an accumulator (accumulator) 1308.

A unified memory 1306 is configured to store input data and output data. Weight data is directly transferred to the weight memory 1302 through a direct memory access controller (Direct Memory Access Controller, DMAC) DMAC 1305. The input data is also transferred to the unified memory 1306 through the DMAC.

A BIU is a bus interface unit, namely, a bus interface unit 1310, and is configured to perform interaction between an AXI bus and the DMAC and between the AXI bus and an instruction fetch buffer (Instruction Fetch Buffer, IFB) 1309.

The bus interface unit (Bus Interface Unit, BIU for short) 1310 is used by the instruction fetch buffer 1309 to obtain an instruction from an external memory, and is further used by the direct memory access controller 1305 to obtain original data of the input matrix A or the weight matrix B from the external memory.

The DMAC is mainly configured to transfer input data in the external memory DDR to the unified memory 1306, transfer weight data to the weight memory 1302, or transfer input data to the input memory 1301.

A vector compute unit 1307 includes a plurality of operation processing units; and if necessary, performs further processing such as vector multiplication, vector addition, an exponential operation, a logarithmic operation, or value comparison on an output of the operation circuit 1303. The vector compute unit 1307 is mainly configured for non-convolutional/fully connected layer network computation in a neural network, such as Batch Normalization (batch normalization), pixel-level summation, and upsampling of a feature map.

In some implementations, a processed vector output by the vector compute unit 1307 can be stored into the unified memory 1306. For example, the vector compute unit 1307 may apply a linear function or a non-linear function to the output of the operation circuit 1303, for example, perform linear interpolation on a feature map extracted at a convolutional layer. For another example, the vector compute unit 1307 may apply a linear function or a non-linear function to a vector of an accumulated value, to generate an activation value. In some implementations, the vector compute unit 1307 generates a normalized value, a pixel-level summation value, or both. In some implementations, the processed output vector can be used as an activation input to the operation circuit 1303, for example, used in a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all On-Chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A data processing method, wherein the method comprises:
obtaining a text;
inserting a separator into the text, wherein the separator is a non-space character string, and the separator identifies a position of string separation in the text; and
performing tokenization on the text into which the separator is inserted, to obtain a tokenization result.

2. The method according to claim 1, wherein the separator is a character string that starts with the non-space character string and ends with at least one space.

3. The method according to claim 1 or 2, wherein the separator is a character corresponding to source code " \u2582 ".

4. The method according to any one of claims 1 to 3, wherein the inserting the separator into the text comprises:
inserting the separator into the text based on at least one of the following methods:
inserting the separator at an adjacent position after a punctuation mark comprised in the text;
inserting the separator at a position at which different languages switch and that is not separated by a space in the text; or
inserting the separator at an adjacent position after a last space of consecutive spaces comprised in the text.

5. The method according to any one of claims 1 to 4, wherein the method further comprises:
obtaining a first processing result of the text based on the tokenization result by using a language model.

6. The method according to any one of claims 1 to 5, wherein
the first processing result comprises a plurality of tokenization units and the separator, and the method further comprises: performing reverse tokenization on the first processing result, and removing the separator, to obtain a second processing result of the text; or
the method further comprises: performing reverse tokenization on the tokenization result, and removing the separator, to obtain a second processing result of the text.

7. The method according to any one of claims 1 to 6, wherein the text into which the separator is inserted further comprises a protection character string, wherein the protection character string identifies a text having a same character as the separator in the text, and indicates that the text having the same character as the separator is not the separator.

8. The method according to claim 6 or 7, wherein the first processing result further comprises the protection character string, and the method further comprises:
removing the protection character string in the first processing result.

9. A data processing apparatus, wherein the apparatus comprises:
an obtaining module, configured to obtain a text; and
a processing module, configured to: insert a separator into the text, wherein the separator is a non-space character string, and the separator identifies a position of string separation in the text; and perform tokenization on the text into which the separator is inserted, to obtain a tokenization result.

10. The apparatus according to claim 9, wherein the separator is a character string that starts with the non-space character string and ends with at least one space.

11. The apparatus according to claim 9 or 10, wherein the separator is a character corresponding to source code " \u2582 ".

12. The apparatus according to any one of claims 9 to 11, wherein the processing module is specifically configured to:
insert the separator into the text based on at least one of the following apparatuses:
inserting the separator at an adjacent position after a punctuation mark comprised in the text;
inserting the separator at a position at which different languages switch and that is not separated by a space in the text; or
inserting the separator at an adjacent position after a last space of consecutive spaces comprised in the text.

13. The apparatus according to any one of claims 9 to 12, wherein the processing module is further configured to:
obtain a first processing result of the text based on the tokenization result by using a language model.

14. The apparatus according to any one of claims 9 to 13, wherein the first processing result comprises a plurality of tokenization units and the separator, and the processing module is further configured to: perform reverse tokenization on the first processing result, and remove the separator, to obtain a second processing result of the text; or
the processing module is further configured to: perform reverse tokenization on the tokenization result, and remove the separator, to obtain a second processing result of the text.

15. The apparatus according to any one of claims 9 to 14, wherein the text into which the separator is inserted further comprises a protection character string, wherein the protection character string identifies a text having a same character as the separator in the text, and indicates that the text having the same character as the separator is not the separator.

16. The apparatus according to claim 14 or 15, wherein the first processing result further comprises the protection character string, and the processing module is further configured to:
remove the protection character string in the first processing result.

17. A computer storage medium, wherein the computer storage medium stores one or more instructions, and when the instructions are executed by one or more computers, the one or more computers are enabled to perform an operation in the method according to any one of claims 1 to 8.

18. A computer program product, comprising computer-readable instructions, wherein when the computer-readable instructions are run on a computer device, the computer device is enabled to perform the method according to any one of claims 1 to 8.

19. A system, comprising at least one processor and at least one memory, wherein the processor and the memory are connected and communicate with each other through a communication bus;
the at least one memory is configured to store a text; and
the at least one processor is configured to execute the text, to perform the method according to any one of claims 1 to 8.
